(19) Europäisches Patentamt

European Patent Office

Office européen des brevets

(11) Publication number: **0 547 039 A2**

## (12) EUROPEAN PATENT APPLICATION

(21) Application number: 93200583.8

(22) Date of filing: 29.11.89

(51) Int. Cl.⁵: **B60C 11/11**, B60C 11/04, B60C 9/20

This application was filed on 02 - 03 - 1993 as a divisional application to the application mentioned under INID code 60.

(30) Priority: 30.11.88 JP 302983/88
30.11.88 JP 302984/88
30.11.88 JP 302985/88
30.11.88 JP 302988/88
30.11.88 JP 302990/88

(43) Date of publication of application:
16.06.93 Bulletin 93/24

(60) Publication number of the earlier application in accordance with Art.76 EPC: **0 371 788**

(84) Designated Contracting States:
DE FR GB

(71) Applicant: SUMITOMO RUBBER INDUSTRIES LIMITED
1-1 Tsutsuicho 1-chome Chuo-ku
Kobe-shi Hyogo-ken(JP)

(72) Inventor: Kajiwara, Shinzo
8-6, Maikodai 5-chome, Tarumi-ku
Kobe-shi, Hyogo-ken(JP)
Inventor: Koini, Yoshio
5-17, Kariguchidai 8-chome, Tarumi-ku
Kobe-shi, Hyogo-ken(JP)
Inventor: Yanase, Manao
8-1, Gakuen Nishimachi 5-chome, Nishi-ku
Kobe-shi, Hyogo-ken(JP)

(74) Representative: Stewart, Charles Geoffrey
SP TYRES UK LIMITED Tyre Technical Division
Fort Dunlop Birmingham B24 9OT (GB)

(54) **Pneumatic radial tyre.**

(57) A pneumatic radial tyre comprising a carcass (6) and a belt (7) comprising belt plies (7A, 7B) composed of steel belt cords (7a) wherein at least two circumferential grooves (G) are constructed in the tread part (2) extending continuously in the direction of the tyres equator (CO) and lateral grooves in some parts defined by dividing the tread part (2) in the axial direction of the tyre into approximately three or four equal areas. (SL, CL, CR, SR). The tyre prevents one side drifting of a car in driving and improves the straight forward driving performance.

FIG.9

This invention relates to a pneumatic radial tyre, and more particularly to a pneumatic radial tyre of improved steerability for passenger cars.

Radial tyres are widely used to give good steering stability, ride comfort, wear rates and so on. However, tyres which are superior in a straight-forward driving performance by preventing drifting to one side of a car in order to increase the driving safety of a car are now being demanded. Conventionally, one-side drifting is considered to be caused by the so-called conicity in which the circumferential lengths of the belt layer in the right and left sides of the tyre are different from each other. Therefore, various methods have been tried to improve the homogeneity in the right and left directions of the tyres axis.

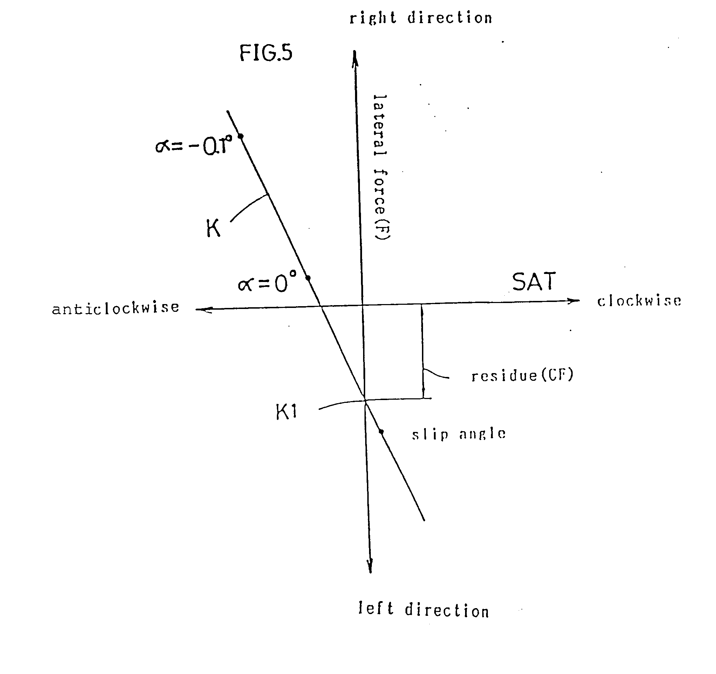

On the other hand, owing to the recent progress in tyre measurement techniques, as shown schematically in Fig.4, the cornering force, i.e. the lateral force F which is generated in the lateral direction Y of a tyre when a tiny slip angle ($\alpha$) is given in the running direction X of the tyre and the self-aligning torque SAT which revolves in the direction of the slip angle ($\alpha$) about the vertical axis Z that passes the centre of a tyre can be measured at a high precision.

Such measurement results are shown by curve K in Fig.5, by plotting the self aligning torque SAT on the axis of abscissas and the lateral torque F on the axis of ordinates. In the curve K, the cases when the slip angle ($\alpha$) is 0 degrees, + 0.1 degrees or - 0.1 degrees are shown by dots.

From this relation of self-aligning torque SAT and lateral force F, the lateral force F at the crossing point K1 of the curve K and the axis of ordinates, that is, the lateral force F when the self-aligning torque SAT is not generated, can be derived and this is called the residue CF. It is the object of thus invention to provide a tyre which prevents one sided drifting of the car, improves straight line performance and has good aesthetic appeal.

The inventors have found that the residue CF is the tyre characteristic which affects the one-side drifting of the car. In other words, a car drifts to one side when the residue CF is in the plus direction. i.e. the right direction. Thus, the one side drifting characteristics of a car can be evaluated by the direction and the size of the residue CF. In order to prevent the one side drifting of a car, it is required to reduce the residue CF.

The residue CF is generated from the expansion and contraction of the belt in the ground contact zone. A shearing strain in a surface is created in the cross ply belt of a radial tyre by the parallel movement of the cords due to expansion and contraction. Thus the tread rubber generates a steering torque by a shearing in the surface generated together with the strain of the belt ply in the outermost layer of the belt. It is considered that the lateral force F is created by this steering torque. Thus it was found that the residue CF is caused by the belt and depends on the cords quantity of the belt and the inclination of the belt cords.

The cord quantity is defined as N x S which is the product of the total sectional area of one belt cord S (sq.mm) and the number of the belt cords N existing in 10cm in the right angled direction of the belt cords. The rigidity of the belt can be reduced by reducing the cord quantity N x S or by enlarging the inclination angle of the cords to the direction of the tyres equator. This reduces the hoop effect of the belt and the residue CF, thereby controlling the one side drifting of a car.

On the other hand, such a reduction of the rigidity of the belt can improve the ride comfort performance at the same time, which is a basic item required for a car.

Additional experiments were conducted for reduction of the residue CF in a tread having a relatively low belt rigidity. As a result, it was found that good results could be obtained by reducing the inclination of the lateral grooves crossing the circumferential grooves of the tread pattern, that is, positioning the lateral grooves closely in the direction of the tyres axis. However, such a tread pattern does not provide a sufficiently powerful image to customers, lacks aesthetic sense, and tends to decrease the marketability of the product.

In another approach it was found that by reducing the belt cord quantity and enlarging the inclination angle to the direction of the tyres equator, the hoop effect is reduced and the cornering force decreases especially upon turning, thus impeding the steering stability.

It is hence a primary object of the invention to provide a pneumatic radial tyre which prevents one side drifting of a car in driving, improves a straight forward driving performance and reducing the deterioration of steering stability.

In the first and second aspects, as described above, by setting the inclination angle of the lateral grooves to the direction of tyres axis at a small angle, the residue CF can be reduced in a tyre. However, in order to increase the product appeal and the marketability of a tyre, a tread pattern must appeal to the aesthetic sense of customers. But, a pattern of lateral grooves extending in a direction of tyres axis is often seen to lack powerfulness. Therefore, in order to increase the powerfulness, the inclination should be larger, but on the other hand, a larger inclination accompanies an increase of the residue CF. Therefore, it is required to meet these contradictory requirements.

According to the invention an increase of the residue CF is prevented and the image of the pattern is improved by constructing approximately symmetrical horizontal grooves in a reverse V shape in the right and left outside areas SL and SR, or the right and left inside areas CL and CR, the inclination angles (ΘsL,ΘsR), or (ΘcL,ΘcR) which are approximately equal, for example, the difference (|ΘsL-ΘsR|), or the difference (|ΘcL-ΘcR|) is 5 degrees, or less, and thus offsetting the effects of the lateral grooves in the right and left inside areas, or the right and left outside areas.

In addition to the above, by setting the cord quantity NS at 15.0 or less and the inclination of the belt cords at 21 degrees or more, the rigidity of the belt can be reduced and the ride comfort improved.

In order to obtain compatibility of the steering stability with the one side drifting performance of a car, the present inventors continued further studies based on a conventional pneumatic radial tyre for passenger cars having rows of blocks formed by crossing the lateral grooves in a rib sectioned by plural circumferential grooves having a linear or zigzag shape which extends in a circumferential direction. As a result of the studies, it was found that the contribution rating of lateral grooves to the cornering performance of a tyre is small, and therefore, they hardly affect the steering stability.

Moreover, it was also discovered that the residue CF is reduced by forming the outer lateral grooves in the right and left outside area SL,SR in the reverse direction to the outside belt cords which are the belt cords of the outermost belt ply and with an inclination of 0 to 40 degrees to the direction of the tyre axis.

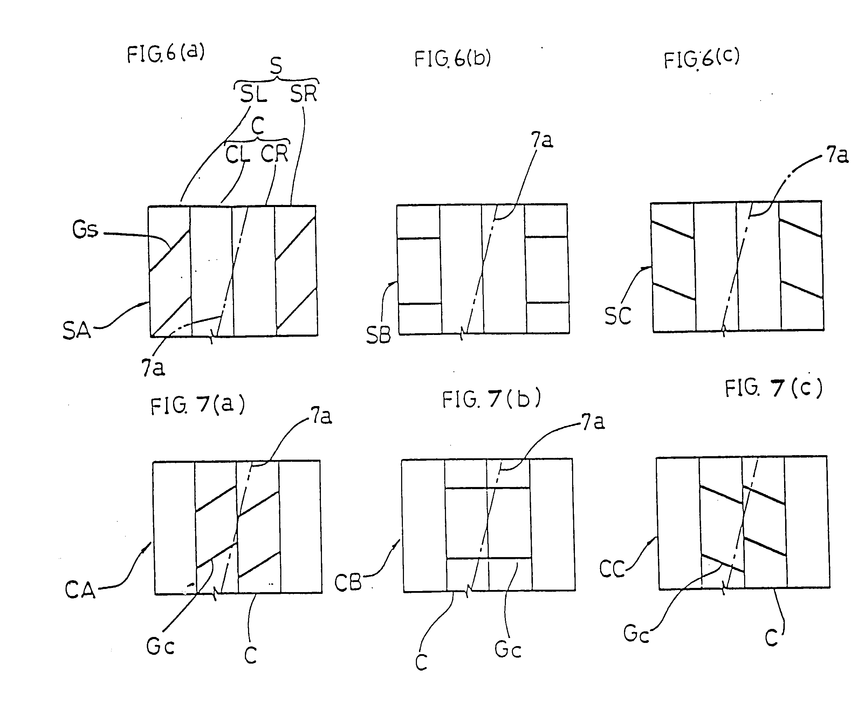

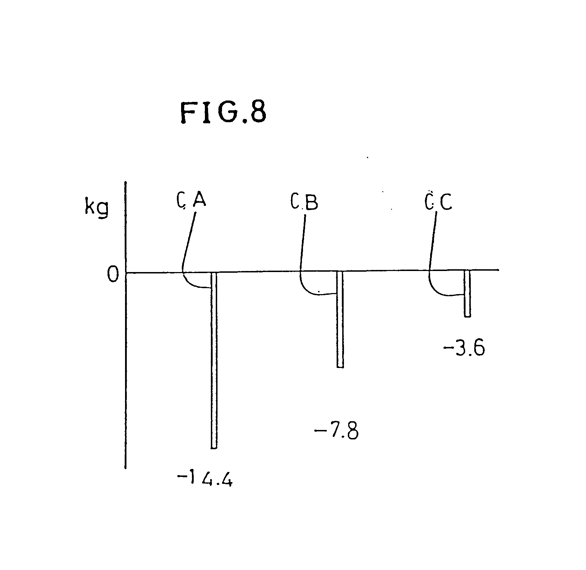

Prototypes of tyres SA, SB and SC having outer lateral grooves Gs in the outside area S in different directions were produced as shown in Figs 6(a) to (c). The outside belt cords 7a of the outermost belt ply are shown by single dotted broken lines in the Figures. In Fig.6 (a), the outer lateral; grooves Gs are inclined in the same direction as the outside belt cords 7a. In Fig.6(b), they are formed in the direction of the tyres axis. In Fig.6 (c), they are formed in the reverse direction. The results of measuring the residue CF in such patterns as SA, SB and SC are shown in Fig.8. In the patterns SA, SB, and SC, the residue CF's are 14.4 kg, 7.8kg and 3.6 kg respectively. Thus, it was provided that the residue CF of the pattern SC in which the outer lateral grooves Gs are constructed in a different direction to the outside belt cords 7a is reduced.

Fig.8 shows the residue CF in the cases of patterns CA, CB and CC from Fig.7 in the case of pattern CA the inner lateral grooves Co are inclined in the same direction as the outside belt cords 7a in the inside area C, as shown in Figs. 7 (a). Figs 7(b) and (c) show the pattern CB in which they are inclined in the direction of the tyre axis and the pattern CC in which they are inclined in the reverse direction, respectively. The residue CFs are 5.9 kg 8.1 kg and 12.1 kg, respectively. The absolute value of the residue CF was thus reduced by inclining the inner lateral grooves in the same direction as the outside belt cords 7a.

Thus it was found that the residue CF can be reduced and the one side drifting performance of a car can be improved by inclining the lateral grooves in the reverse direction to the outside belt cords 7a in the outside area S and in the same direction in the inside area C.

Therefore, in the aspect of the invention, outer horizontal grooves Gs constructed in the outside area S are inclined in a different direction to the outside belt cords 7a and at 0 to 40 degrees to the direction of the tyres axis.

Embodiments of the invention will be described in detail below, in conjunction with the attached drawings in which:-

Fig.1. is a sectional view showing an embodiment of the first invention;

Fig.2 is a sectional view of a belt ply;

Fig.3 is a sectional view showing an example of a belt cord;

Fig.4 is a perspective view explaining the residue CR;

Fig.5 is its diagram;

Figs. 6(a) to (c) and 7(a) to (c) are plan view showing patterns used in the experiments;

Fig.8 is a diagram showing the experimental results;

Fig.9 is a plan view showing the pattern of one embodiment of the invention; and

Figs 10 to 13 are plan views showing other patterns.

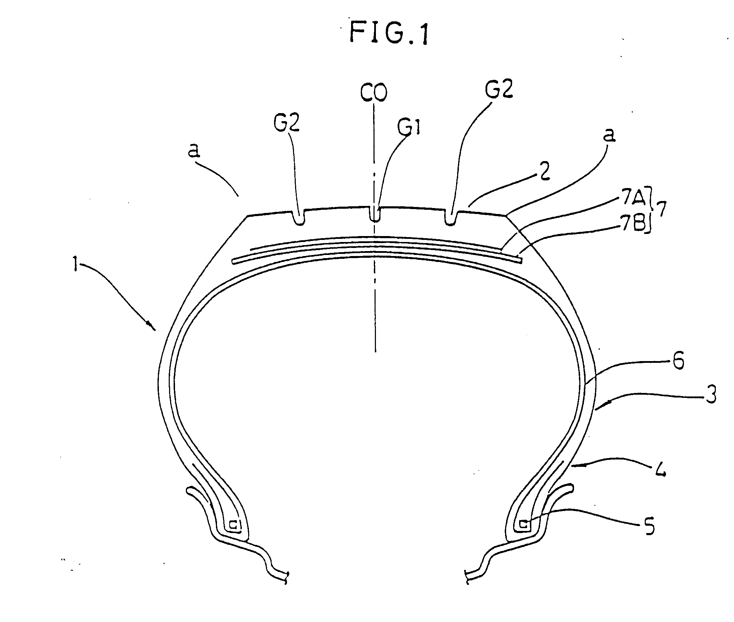

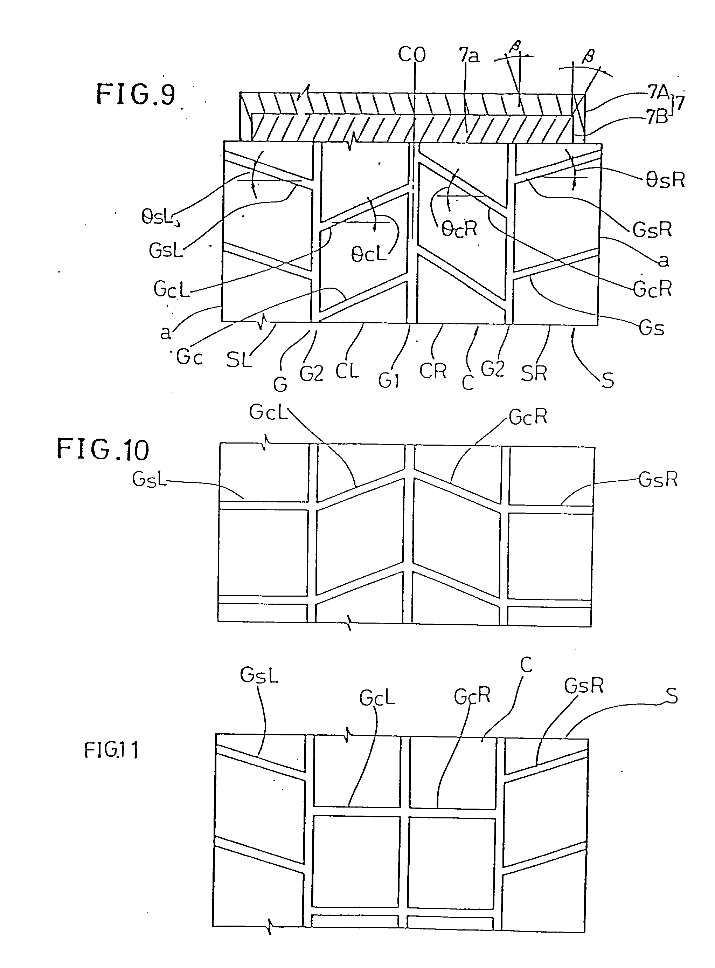

In Figs 1 and 9, a pneumatic radial tyre 1 of the first invention comprises a carcass 6 extending from a tread part 2 through a side-wall part 3 to a bead part 4 and wrapped around a bead core 5 in each bead a belt 7 is placed radially outside the carcass 6 and inside the tread part 2.

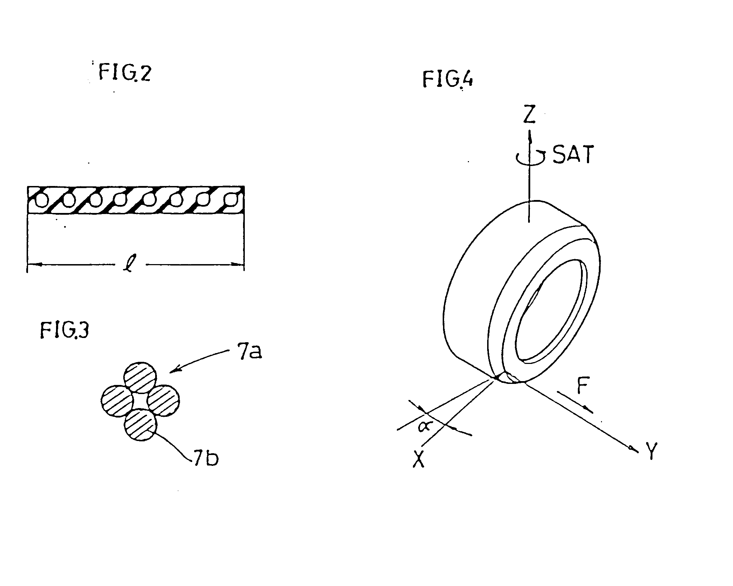

The belt 7 comprises belt plies 7A and 7B of two inside and outside layers which are inclined in mutually reverse directions at an inclination angle ($\beta$) of 21 degrees or more to the tyres equator CO of the belt cords. The outermost belt ply cords of the outside belt ply 7A in the embodiment are inclined in the right upper direction to the tyres equator CO as shown in Fig.9. For belt cords 7a, as shown for example in Fig.3 twisted steel filaments 7b in 2 + 7 x 0.22, 1 x 5 x 0.23 or 1 x 4 x 0.22 relationship may be used.

The cord quantity NS which is the product of the total sectional area S (sq.mm) of one cord, that is, the sum of the sectional areas of the filaments 7b of the cord and the number of cords N in a distance 1 of 10 cm in Fig.2 is 15.0 or less, thereby the rigidity of the belt 7 is reduced and the ride comfort performance is improved in the tyre.

In Fig.9, the tread part 2 is sectioned in the direction of tyres axis into a left inside area CL and a right inside area CR at either side of the tyres equator CO, a left outside area SL and a right outside area SR which extend to the edges a of the tread part.

In the right and left outside area S, substantially symmetrical outer lateral grooves GsL and GsR (generally called outer lateral grooves Gs) are separately constructed with reverse inclinations of ($\theta$sL) and ($\theta$sR) of 20 degrees to the direction of the tyre axis in the direction of the tyres equator (CO).

In addition, in the embodiment, substantially symmetrical inner lateral grooves GcL and GcR (Generally called inner lateral grooves Gc) are separately constructed in the right and left inside areas CL, CR but with reverse inclinations of ($\theta$cL) and ($\theta$cR) of 30 degrees to the direction of tyre axis. The difference of the inclination angles ($|\theta$sL-$\theta$sR$|$) and ($|\theta$cL-$\theta$cR$|$) is set at 5 degrees or less.

Thus, the lateral grooves Gs and Gc are symmetrical in the direction of the tyres equator CO and the effect of the residue CF by the inclinations is reduced. The appearance is also improved.

If the inclinations ($\theta$sL), ($\theta$sR), ($\theta$cL) and ($\theta$cR) of the outer lateral grooves and Gc exceed 45 degrees, a pattern noise tends to be generated.

Circumferential pitches Ps and Pc which are the distances between the outer and inner lateral grooves Gs and Gc in the direction of the tyres equator (Co) care both set at 40mm or less preferably at 20 mm or less.

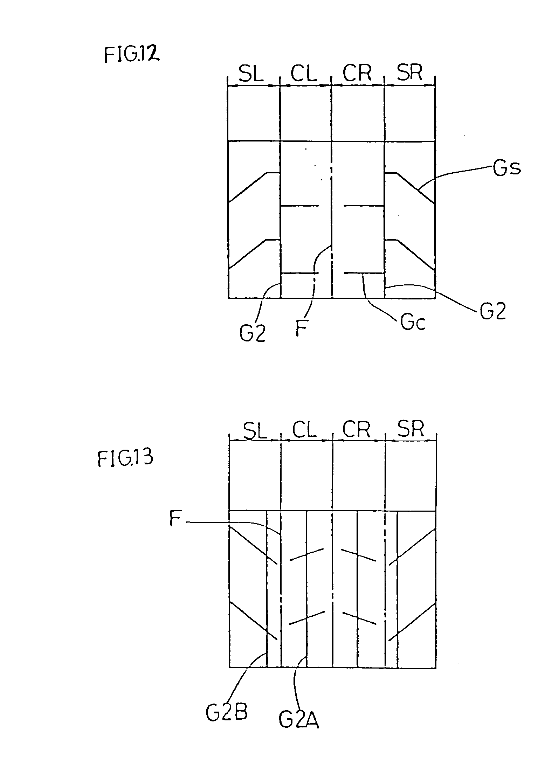

Fig.10 shows another embodiment in which the inner lateral grooves Gc of the inside area C are formed in a reverse V shape, and Fig.11 shows still other embodiments in which the outer horizontal grooves Gc are formed in a reverse V shape whilst the other lateral grooves Gs or the horizontal grooves Gc extend in the direction of the tyre axis.

Thus Figs. 9 to 11 show embodiments where the main grooves G1 and G2 are constructed respectively in the parts that section the inside area C and the outside area S, while in the case that two main grooves G2 are employed, as shown in Fig.12, or in the case that four or more grooves G2A, and G2B are employed, spaced apart at regular intervals as shown in Fig.13, the inside area C and the outside area S are considered to be sectioned by a virtual line R on the ib. At least one end of the inner circumferential groove Gc must open to a main groove G.

As a working example a prototype tyre having a size of 175/70R13 was produced and the ride comfort and the residue CF were measured. For the belt cords, steel cords of 1 x 4 x 0.22 were used. the belt was formed in two plies. The test was performed by mounting the tyre on a rim 5J x 13 setting the internal pressure at 2.0 kg/sq.cm, the load at 300 kg and using a flat track tyre test machine supplied by MTS company, USA to measure the residue CF. The residue CF is shown by a residue CF index setting the index of the comparison example at 100 in Table 1 etc. The smaller the residue of Index is, the more preferable the result is. In regard to the ride comfort, by mounting the tyre on a 2,000 cc passenger car, a feel test was conducted by a driver, and an evaluation was made by setting the comparison examples at 100 points. Higher scores show better ride comfort.

In regard to the invention, a tyre as shown in Table 1, Figs 9,10 and 11 was produced. The results are shown in the Table 1.

Thus, the invention can improve the one-side drifting of a car without sacrificing steering stability.

T a b l e  1

| | Em.2-1 | Em.2-2 | Em.2-3 | Em.2-4 | Co.2-1 | Co.2-2 | Co.2-3 |
|---|---|---|---|---|---|---|---|
| Pattern | Fig. 9 | Fig. 9 | Fig.10 | Fig.11 | Fig. 9 | Fig.10 | Fig.11 |
| Belt cord $N \times S$ | 12.2 | 12.2 | 14.5 | 14.5 | 15.4 | 15.4 | 20.5 |
| Inclination angle | 21 | 25 | 21 | 25 | 21 | 18 | 21 |
| Lateral groove GsL in left outside area Inclination angle ($\theta sL$) | 20 | 20 | 0 | 15 | 20 | 20 | 20 |
| Direction | Right lower | Right lower | — | Right lower | Right lower | Right lower | Right lower |
| Circumferential pitch Pc (mm) | 18 | 18 | 18 | 18 | 18 | 18 | 18 |
| Lateral groove GsR in right outside area Inclination angle ($\theta sR$) | 20 | 15 | 0 | 12 | 10 | 0 | 10 |
| Direction | Right upper | Right upper | — | Right upper | Right upper | — | Right upper |
| Circumferential pitch Ps (mm) | 18 | 18 | 18 | 18 | 18 | 18 | 18 |
| Lateral groove GcL in left inside area Inclination angle ($\theta cL$) | 30 | 30 | 30 | 0 | 30 | 30 | 0 |
| Direction | Right upper | Right upper | Right upper | — | Right upper | Right upper | — |
| Circumferential pitch Pc (mm) | 18 | 18 | 18 | 18 | 18 | 18 | 18 |
| Lateral groove GcR in right inside area Inclination angle ($\theta cR$) | 30 | 25 | 30 | 0 | 30 | 30 | 30 |
| Direction | Right lower | Right lower | Right lower | — | Right lower | Right lower | Right lower |
| Circumferential pitch Ps (mm) | 18 | 18 | 18 | 18 | 18 | 18 | 18 |
| Riding comfort | 108 | 110 | 103 | 105 | 100 | 96 | 95 |
| Residue CF index | 73 | 24 | 78 | 35 | 100 | 160 | 130 |

Em. ; Embodiment
CO. ; Comparative example

## Claims

1. A pneumatic radial tyre comprising a pair of bead cores (5) each disposed in each bead part (4), a carcass (6) turned up around the bead cores, a steel belt (7) disposed radially outside the carcass and

5

inside a tread part (2), and at least two circumferential grooves in said tread part, wherein said tread part (2) is provided with three circumferential lines of demarcation to define four equal-width axial sections (SR,CR,CL,SL), which are a pair of right and left axially inner sections (CR,CL) one on each side of the tyre equator and a pair of right and left axially outer sections (SR,SL) axially outward of the right and left inner sections, respectively, said tread part characterised in that at least either the paired inner section (CR and CL) or the paired outer section (SR and SL) are provided with inclined lateral straight grooves, and the lateral straight grooves in one right section (CR or SR) have an inclination which is, with respect to the tyre axial direction, angularly the same as but directionally opposite to the inclination of the lateral straight grooves in the paired left section (CL or SL).

2. A tyre according to claim 1 characterised in that said inclined lateral straight grooves are provided in only the two outer sections (SR and SL).

3. A tyre according to claim 1 characterised in that said inclined lateral straight grooves are provided in only the two inner sections (CR and CL).

4. A tyre according to claim 2 or 3 characterised in that the remaining inner or outer sections are provided with lateral straight grooves extending in parallel with the axial direction.

5. A tyre according to claim 1 characterised in that said inclined lateral straight grooves are provided in both the paired outer sections (SR and SL) and the paired inner sections (CR and CL).

6. A tyre according to claim 5 characterised in that the inclination of the lateral straight grooves in one inner section (CR or CL) is opposite to that of the lateral straight grooves in the adjacent outer section (SR or SL).

7. A tyre according to any one of claims 1-6 characterised in that said at least two circumferential grooves are straight grooves which are located on said circumferential lines of demarcation, and each said inclined lateral straight grooves has at least one end connected to one circumferential groove.

8. A tyre according to any one of claims 1-6 characterised in that said at least two circumferential grooves are straight grooves which are not located on said circumferential lines of demarcation, and each said inclined lateral straight groove is crossed by one circumferential groove.

9. A tyre according to any one of the preceding claims characterised in that said belt comprises two plies (7A,7B) of parallel steel cords (7a) laid at not less than 21 degrees to the tyre equator, and each said ply has a cord quantity of less than 15, the cord quantity defined as the total of the cross sectional areas (sq.mm) of the steel cords (7a) per 10cm ply width in a right angled direction to the steel cords.

# FIG.1

EP 0 547 039 A2

FIG.2

FIG.3

FIG.4

FIG.5

right direction

lateral force (F)

α = -0.1°

K

α = 0°

SAT

anticlockwise

clockwise

residue (CF)

K1

slip angle

left direction

FIG.6(a)

FIG.6(b)

FIG.6(c)

FIG. 7(a)

FIG. 7(b)

FIG. 7(c)

# FIG.8

kg

C.A          C.B          C.C

0

-3.6

-7.8

-14.4

FIG.9

FIG.10

FIG.11

FIG.12

| SL | CL | CR | SR |

Gs

G2

F

Gc

G2

FIG.13

| SL | CL | CR | SR |

F

G2B

G2A